(19) Europäisches Patentamt / European Patent Office / Office européen des brevets

(11) **EP 2 053 348 A1**

(12) **EUROPÄISCHE PATENTANMELDUNG**

(43) Veröffentlichungstag:
   **29.04.2009 Patentblatt 2009/18**

(51) Int Cl.:
   ***G01B 11/02*** (2006.01)   ***G01N 21/00*** (2006.01)
   ***G06T 7/00*** (2006.01)

(21) Anmeldenummer: **07024244.1**

(22) Anmeldetag: **13.12.2007**

(84) Benannte Vertragsstaaten:
   **AT BE BG CH CY CZ DE DK EE ES FI FR GB GR HU IE IS IT LI LT LU LV MC MT NL PL PT RO SE SI SK TR**
   Benannte Erstreckungsstaaten:
   **AL BA HR MK RS**

(30) Priorität: **23.10.2007 EP 07020691**

(71) Anmelder: **Texmag GmbH Vertriebsgesellschaft 8800 Thalwil (CH)**

(72) Erfinder: **Crotti, Silivio 24020 Ranica Bergamo (IT)**

(74) Vertreter: **Witzany, Manfred Patentanwalt Falkenstrasse 4 85049 Ingolstadt (DE)**

(54) **Verfahren und Vorrichtung zur optischen Erfassung eines Objekts**

(57)   Eine Vorrichtung (1) dient zum optischen Erfassen eines Objekts (2) mit einer Kamera (3). Um Abstand und Winkellage des zu erfassenden Objekts (2) bestimmen bzw. das von der Kamera (3) erfaßte Bild entzerren zu können, weist die Vorrichtung (1) mindestens eine Referenzlichtquelle (6) auf. Diese Referenzlichtquelle (6) erzeugt Referenzlichtstrahlen (8), die in Auftreffpunkten (9) auf dem Objekt (2) auftreffen. Diese Auftreffpunkte (9) erscheinen im Bild der Kamera (3) als helle Punkte. Aus der geometrischen Anordnung der Auftreffpunkte (9) im Bild der Kamera (3) können die Entfernung und Winkellage des Objekts (2) berechnet und das Kamerabild entzerrt werden.

*Fig. 1*

EP 2 053 348 A1

## Beschreibung

Es ist bekannt, Objekte wie laufende Warenbahnen mittels einer Kamera, insbesondere einer CCD- bzw. CMOS-Kamera zu erfassen. Insbesondere zu Meßzwecken hat diese Technik jedoch den Nachteil, daß aus diesem Bild keine exakten Daten für das erfaßte Objekt gewonnen werden können. Zum einen ändert sich die Größe des aufgenommenen Bildes in Abhängigkeit vom Abstand zwischen der Kamera und dem aufzunehmenden Objekt. Zum anderen ergeben sich durch nicht exakt senkrecht zur Objektebene aufgenommene Bilder Verzerrungen. Diese Verzerrungen sind in der Regel trapezartig, so daß eine exakte Vermessung des aufzunehmenden Objekts in der Regel nicht möglich ist.

Der Erfindung liegt die Aufgabe zugrunde, ein Verfahren zur Erfassung eines Objekts der eingangs genannten Art zu schaffen, welches sich durch eine verbesserte Genauigkeit der produzierten Meßergebnisse auszeichnet. Außerdem soll eine Vorrichtung zur Durchführung dieses Verfahrens angegeben werden.

Diese Aufgabe wird erfindungsgemäß mit den Schritten des Patentanspruchs 1 sowie mit den Merkmalen des Patentanspruchs 10 gelöst.

Bei dem Verfahren gemäß Anspruch 1 wird das optisch zu erfassende Objekt mit Referenzlichtstrahlen beleuchtet, die in Auftreffpunkten auf das Objekt treffen. Es spielt dabei keine Rolle, ob die Referenzlichtstrahlen nur einzelne Punkte oder durch Überlagerung vieler Referenzlichtstrahlen Linien auf dem Objekt erzeugen. Falls sich eine Mehrzahl von Referenzlichtstrahlen zu einer geraden Linie ergänzt, wobei diese Referenzlichtstrahlen konvergent bzw. divergent sind, ist noch mindestens ein weiterer einzelner Referenzlichtstrahl erforderlich, um die Bedingung zu erfüllen, daß die Referenzlichtstrahlen nicht in einer Ebene liegen. Falls sich die Referenzlichtstrahlen dagegen zu einer nicht geraden Linie ergänzen, so liegen die einzelnen Referenzlichtstrahlen nicht mehr in einer Ebene und sind auch nicht parallel zueinander. In diesem Fall sind keine weiteren Referenzlichtstrahlen erforderlich. Beispielsweise könnten sich die Referenzlichtstrahlen zu einem Kreis oder einem Quadrat ergänzen, wobei aus der Verzerrung dieser geometrischen Figur alle geometrischen Abbildungsfehler berechnet werden können. Die Aufzählung dieser geometrischen Formen ist jedoch nicht abschließend zu verstehen. Wichtig ist, daß die Referenzlichtstrahlen zueinander nicht parallel sind. Grundsätzlich spielt es keine Rolle, ob die Referenzlichtstrahlen zueinander konvergierend oder voneinander divergierend sind. Dies hängt insbesondere von der Größe des beobachteten Objekts im Verhältnis zur Kameragröße ab. Bei großen Objekten ist eine divergierende Anordnung vorzuziehen, um die Referenzlichtquelle kompakt aufbauen zu können. Bei sehr kleinen Objekten kann unter Umständen die konvergierende Variante günstiger sein. Durch die nicht parallele Lichtrichtung der Referenzlichtstrahlen wird erreicht, daß die gegenseitige Distanz der Auftreffpunkte der Referenzlichtstrahlen auf dem Objekt von der Objektentfernung abhängig wird. Auf diese Weise kann unmittelbar die Entfernung des Objekts von der Referenzlichtquelle bzw. einer mit dieser verbundenen Kamera bestimmt werden. Ist die untersuchte Fläche des Objekts zur Objektivachse der Kamera geneigt, so ergibt sich zusätzlich eine perspektivische Verzerrung, die sich als Kombination einer parallelogrammartigen und einer trapezförmigen Verzerrung beschreiben läßt. Auf diese Weise werden die Winkel zwischen Verbindungsgeraden zweier Auftreffpunkte verzerrt. Aus diesen Verzerrungen kann damit die Winkellage des Objekts relativ zur Kameraachse bestimmt werden. Alternativ oder zusätzlich ist es natürlich auch möglich, die von der Kamera aufgenommenen Bilddaten direkt zu entzerren, wobei die von der Kamera aufgenommenen Auftreffpunkte der Referenzlichtstrahlen auf das Objekt als Referenzmarker dienen. Nachdem die Referenzlichtstrahlen durch die vorgegebene Anordnung definiert sind, kann die unverzerrte Lage der Auftreffpunkte unmittelbar festgelegt werden. Durch Anwendung entsprechender Transformationen auf die Bilddaten werden dann die in den Bilddaten enthaltenen Auftreffpunkte in ihre Sollagen gebracht, so daß insgesamt ein entzerrtes Bild entsteht. Auf diese Weise ist es möglich, eine Oberflächenstruktur wie beispielsweise ein Warenbahnmuster mit undefinierter Entfernung und Winkellage der Kamera zu erfassen und aus den gewonnenen Bilddaten das entzerrte Bild des Musters zu berechnen. Damit sind exakte Messungen an derartigen Mustern möglich, um beispielsweise Fehler zu erkennen. Da die Bilddaten und die Auftreffpunkte der Referenzlichtstrahlen von der gleichen Kamera und dem gleichen Objektiv erfaßt werden, werden Abbildungsfehler des Kamerasystems ebenfalls mitkorrigiert.

Gemäß Anspruch 2 ist es günstig, wenn aus den von der Kamera erfaßten Auftreffpunkten der Referenzlichtstrahlen am Objekt ein entzerrtes Kamerabild berechnet wird. Hierbei wird eine parametrisierte Transformation zugrunde gelegt, die die gesamten perspektivischen Verzerrungen des Kamerabildes kompensiert. Die im Kamerabild erfaßten Auftreffpunkte der Referenzlichtstrahlen werden dann dieser Transformation unterworfen, wobei die transformierten Werte als gegeben vorausgesetzt werden. Sind beispielsweise vier Referenzlichtstrahlen vorgesehen, wobei je zwei benachbarte Referenzlichtstrahlen den gleichen Winkel zueinander einschließen und gleichzeitig alle Referenzlichtstrahlen auf einer Kegelmantelfläche liegen, so besteht das unverzerrte Bild aus vier Punkten, die die Eckpunkte eines Quadrats bilden. Aus diesen acht Informationen im Pixelbild der Kamera ergibt sich ein Gleichungssystem, aus welchem die Transformationsparameter unmittelbar berechnet werden können.

Zur Entzerrung üblicher perspektivisch verzerrter Bilddaten ist es gemäß Anspruch 3 ausreichend, wenn das Kamerabild mindestens einer Translations-, Rotations-, Dehnungs-, Parallelogramm- bzw. Trapez-Transformation unterworfen wird. Die entsprechenden Transformationsparameter werden dabei direkt aus den Auftreffpunkten im Kamerabild berechnet. Dabei kann direkt die Transformation der Rohbilddaten in das entzerrte Bild berechnet werden, wodurch das Gleichungssystem selbst in der Regel recht kompliziert wird. Alternativ kann auch die Rücktransformation der entzerrten Bilddaten in die verzerrten Bilddaten berechnet werden, was bei einfacher Lage der unverzerrten Auftreffpunkte im Koordinatensystem in der Regel recht einfach ist. In diesem Fall muß anschließend noch die inverse Transformation bestimmt werden, die ausschließlich von den Parametern der berechneten Transformation abhängt. Diese inverse Transformation wird dann auf die gesamten Bilddaten angewendet.

Alternativ oder zusätzlich kann gemäß Anspruch 4 auch direkt aus den im Kamerabild gemessenen Auftreffpunkten die Objektentfernung bzw. der Winkel zwischen der Kameraachse und der Objektfläche berechnet werden. Insbesondere in Fällen, in denen lediglich die Aufnahmeparameter protokolliert werden müssen oder aus einer Vielzahl von Kamerabildern nur einige wenige zu entzerren sind, kann auf diese Weise viel Rechenleistung eingespart werden.

Gemäß Anspruch 5 ist es günstig, aus dem gegenseitigen Abstand zweier Auftreffpunkte bzw. aus dem Mittelwert mehrerer Abstände von Auftreffpunkten die Entfernung der Kamera zum Objekt zu berechnen. Dabei wird ausgenützt, daß bei divergenten Lichtstrahlen der Abstand der Auftreffpunkte mit zunehmendem Abstand vom gedachten Schnittpunkt der Referenzlichtstrahlen größer wird. Damit kann aus der mittleren Entfernung der Auftreffpunkt im Kamerabild bei bekannter Brennweite des Objektivs direkt der Abstand des Objekts bestimmt werden.

Ist die betrachtete Objektfläche zur Achse der Kamera geneigt, so haben verschiedene Bereiche des Objekts von der Kamera unterschiedliche Abstände. Auftreffpunkte, die im weiter von der Kamera entfernten Bereich des Objekts liegen, kommen daher bei divergenten Referenzlichtstrahlen weiter außen zu liegen als Auftreffpunkte im näher zur Kamera liegenden Bereich. Dies führt zu Winkelverzerrungen zwischen gedachten Verbindungsgeraden zwischen den Auftreffpunkten, aus denen gemäß Anspruch 6 unmittelbar die Neigung der Objektfläche zur Kameraachse berechnet werden kann.

Bei intensiver Lichtquelle für die Referenzlichtstrahlen ist es grundsätzlich möglich, diese im Kamerabild zu identifizieren. Allerdings muß auf diese Weise der Dynamikbereich der Kamera eingeschränkt werden. Einfacher ist es, wenn gemäß Anspruch 7 die Referenzlichtstrahlen synchron zur Kamera angesteuert werden. Beispielsweise können die Referenzlichtstrahlen nur bei jedem zweiten Kamerabild angestellt werden, so daß aus der Differenz zweier Kamerabilder im wesentlichen nur das Signal der Referenzlichtstrahlen gewonnen wird. Auf diese Weise kann die Detektion der Auftreffpunkte im Kamerabild erleichtert werden.

Gemäß Anspruch 8 ist es vorteilhaft, mit Hilfe der Kamera periodische Strukturen des Objekts auszumessen. Es spielt dabei keine Rolle, ob eine Periodenlänge oder eine Raumfrequenz der periodischen Struktur erfaßt wird. In jedem Fall ist es wichtig, Abbildungsfehler der Kamera zu korrigieren. Dies geschieht am einfachsten durch eine Bildanalyse am entzerrten Kamerabild. Alternativ kann auch das Originalbild genutzt werden, wobei aus den gemessenen Auftreffpunkten der Referenzlichtstrahlen im Kamerabild Korrekturfaktoren gewonnen werden. Auf diese Weise ist eine exakte Vermessung der periodischen Struktur des Objekts möglich. Dieses Verfahren wird bevorzugt zum Maschen-bzw. Fadenzählen einer laufenden Warenbahn eingesetzt.

Gemäß Anspruch 9 ist es günstig, die Kamera mit Hilfe der berechneten Werte auf das Objekt auszurichten. Je nach Anwendungsfall wird die Kamera dabei senkrecht zum Objekt oder in einen vordefinierten Winkel einjustiert. Dabei helfen die berechneten Werte, die richtige Justierung der Kamera zu finden. Vorzugsweise wirken die berechneten Werte auf eine Regelung ein, welche Stellmotoren zur Ausrichtung der Kamera beeinflussen. Auf diese Weise wird die Kamera selbsttätig einjustiert, so daß dieser Vorgang schnell und präzise durchgeführt werden kann.

Zur Durchführung des erfindungsgemäßen Verfahrens hat sich die Vorrichtung gemäß Anspruch 10 bewährt. Diese Vorrichtung dient zur Erfassung eines Objekts, insbesondere einer laufenden Warenbahn. Sie weist eine Kamera und mindestens eine Referenzlichtquelle auf, die Referenzlichtstrahlen gegen das Objekt richtet. Es ist dabei möglich, daß eine Referenzlichtquelle mehrere Referenzlichtstrahlen erzeugt. Grundsätzlich kann die Referenzlichtquelle auch alle erforderlichen Referenzlichtstrahlen auf diese Weise erzeugen. Alternativ kann auch jeder einzelnen Referenzlichtstrahl von einer gesonderten Referenzlichtquelle erzeugt werden. Die Referenzlichtstrahlen erzeugen auf dem Objekt Auftreffpunkte, die von der Kamera in elektrische Signale umwandelbar sind. Die einzelnen Auftreffpunkte sind demnach innerhalb des Erfassungsbereichs der Kamera vorgesehen, um als geometrische Referenz dienen zu können. Die Vorrichtung weist außerdem eine Rechenschaltung auf, die Abstände bzw. Winkel zwischen den Auftreffpunkten im Kamerabild berechnen kann. Diese in Pixel gemessenen Abstände bzw. Winkel sind Grundlage für eine spätere Entzerrung des aufgenommenen Kamerabildes bzw, für eine Berechnung der Objektentfernung bzw. der Objektneigung.

Um für unterschiedlichste Objektentfernungen sauber definierte Auftreffpunkte einzustellen, ist es gemäß Anspruch 11 vorteilhaft, wenn die Referenzlichtquelle mindestens einen Laser aufweist. Ein Laser zeichnet sich durch eine geringe Divergenz aus, so daß der Auftreffpunkt auf dem Objekt in unterschiedlichsten Entfernungen definiert bleibt. Außerdem ergibt sich auf diese Weise ein hoher Lichtfluß der Referenzlichtquelle, so daß die Auftreffpunkte im Kamerabild gut sichtbar sind.

Um aus einer Referenzlichtquelle mehrere zueinander divergente Referenzlichtstrahlen zu erzeugen, ist es gemäß Anspruch 12 vorteilhaft, der Referenzlichtquelle mindestens ein Beugungsgitter, einen teildurchlässigen Spiegel bzw. doppelbrechenden Refraktor nachzuordnen. Ein Beugungsgitter teilt das Licht der Referenzlichtquelle in mehrere Teilstrahlen mit unterschiedlichen Winkeln auf, die als Ordnungen bezeichnet werden. Die einzelnen Ordnungen schließen dabei gleiche Winkel ein, was die Auswertung des Kamerabildes vereinfacht. Vorzugsweise wird ein Kreuzgitter eingesetzt, um einen zweidimensionalen Beugungseffekt zu erzielen. Auf diese Weise entsteht ein Raster von näherungsweise äquidistanten Punkten auf dem unverzerrten Objekt, was durch Ausrichtungsfehler entsprechend verzerrt wird. Durch einen teildurchlässigen Spiegel kann der Strahl der Referenzlichtquelle in zwei Teilstrahlen aufgespalten werden, die durch nachfolgende optische Elemente in beliebige Divergenzen aufspaltbar sind. Ein doppelbrechender Refraktor erzeugt durch seine zwei unterschiedlichen Brechungsindices aus einem Strahl zwei Strahlen mit unterschiedlicher Ausbreitungsrichtung, so daß auch auf diese Weise sehr einfach mehrere Referenzstrahlen erzeugt werden können.

Um die Entzerrung des Bildes möglichst einfach zu gestalten, ist es gemäß Anspruch 13 günstig, die Referenzlichtstrahlen in etwa von einem gedachten Punkt aus zu divergieren. Im Fall einer Konvergenz der Referenzlichtstrahlen treffen sich dieses real im Konvergenzpunkt.

Zur Vereinfachung der Berechnung der Entzerrung ist es gemäß Anspruch 14 vorteilhaft, wenn benachbarte Referenzlichtstrahlen in etwa gleiche Winkel zueinander einschließen. Auf diese Weise vereinfachen sich die mathematischen Terme der Transformation zur Entzerrung des Bildes.

Eine besonders einfache Transformation ergibt sich, wenn gemäß Anspruch 15 die Referenzlichtstrahlen in einer Ebene senkrecht zur optischen Achse der Kamera die Eckpunkte eines Quadrats bilden. Dabei kann der Koordinatenursprung in einen Auftreffpunkt gelegt werden, wobei zwei weitere Auftreffpunkte im unverzerrten Fall auf den Koordinatenachsen zu liegen kommen.

Schließlich ist es gemäß Anspruch 16 günstig, der Referenzlichtquelle eine Zylinderlinse nachzuordnen. Auf diese Weise wird das Objekt strichförmig beleuchtet, so daß die Winkel der einzelnen Striche zueinander sehr genau ausgemessen werden können.

Der Erfindungsgegenstand wird beispielhaft anhand der Zeichnung erläutert, ohne den Schutzumfang zu begrenzen.

Es zeigt:

Figur 1     eine schematische, perspektivische Darstellung einer Vorrichtung zur optischen Erfassung eines Objekts mit separaten Referenzlichtquellen,

Figur 2     die Vorrichtung gemäß Figur 1 mit einem optischen Gitter,

Figur 3     die Vorrichtung gemäß Figur 1 mit einem doppelbrechenden Refraktor,

Figur 4     die Vorrichtung gemäß Figur 1 mit einem teildurchlässigen Spiegel,

Figur 5     eine Veranschaulichung eines Algorithmus zur Bildtransformation,

Figur 6     eine schematische Seitenansicht der Vorrichtung gemäß Figur 1 zur Abstandsberechnung und

Figur 7     eine schematische Grund-, Auf- und Seitenrißdarstellung einer Vorrichtung gemäß Figur 1 zur Winkelberechnung.

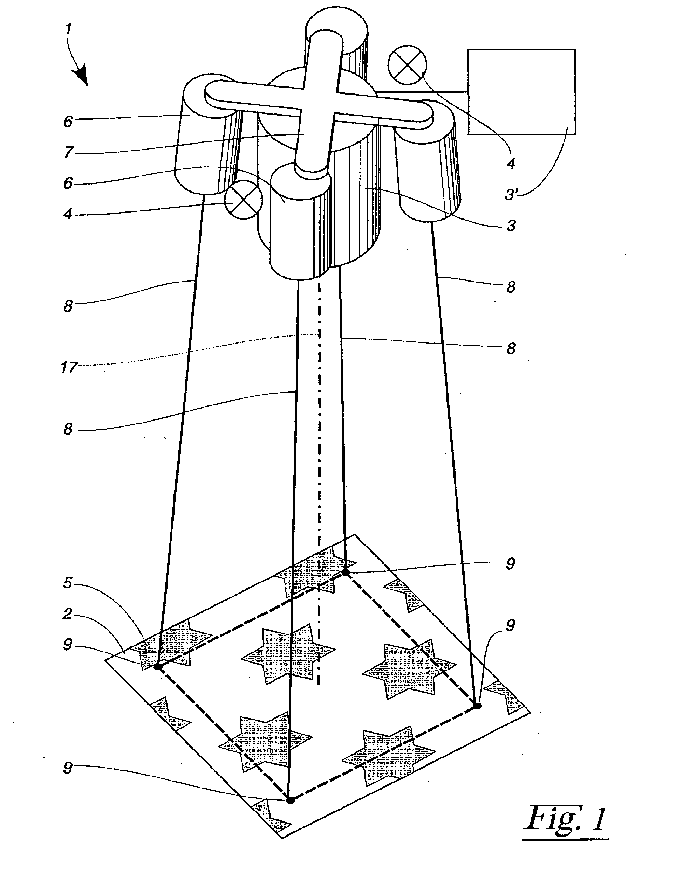

Die Figur 1 zeigt eine räumliche Darstellung einer Vorrichtung 1 zum optischen Erfassen eines Objekts 2, insbesondere einer laufenden Warenbahn 2. Die Vorrichtung 1 weist eine Kamera 3 auf, die vorzugsweise als CCD- oder CMOS-Kamera ausgebildet ist. Grundsätzlich ist der Erfindungsgegenstand jedoch nicht auf diese Kameraarten beschränkt. Die Kamera 3 erfaßt das Objekt 2 optisch, wobei Lichtquellen 4 lediglich symbolisch angedeutet sind. Am Objekt 2 ist ein optisch abtastbares Muster 5 vorgesehen, welches von der Vorrichtung 1 erfaßt wird.

Die Vorrichtung 1 soll dabei das Muster 5 möglichst exakt vermessen, was grundsätzlich eine präzise Ausrichtung der Kamera 3 gegenüber dem Objekt 2 erforderlich macht. Diese exakte Ausrichtung ist in der Praxis jedoch oft nicht durchführbar, da hierfür in der Regel nur wenig Zeit zur Verfügung steht. Insbesondere bei laufenden Warenbahnen als Objekt 2 ergibt sich zusätzlich das Problem, daß entweder die gesamte Anlage während der Justierung der Kamera 3 stillstehen müßte oder die Funktionstüchtigkeit der Produktionsanlage wegen einer Fehljustierung der Kamera 3 nicht vollständig gewährleistet ist.

Durch Ausrichtungsfehler der Kamera 3 wird das Bild, welches die Kamera 3 erfaßt, in seiner Größe verändert. Außerdem wird das Bild perspektivisch verzerrt, was eine exakte Erfassung des auf dem Objekt 2 vorgesehenen Musters 5 unmöglich macht.

Um das Bild entzerren zu können, schafft sich die Vorrichtung 1 eine zusätzliche Referenz, anhand derer die Bildverzerrungen quantitativ erfaßbar sind. Diese Referenz wird von vier Referenzlichtquellen 6 in Form von Lasern 6 gebildet, die über eine Halterung 7 fest mit der Kamera 3 verbunden sind. Die Laser 6 sind dabei derart einjustiert, daß die von diesen ausgehenden Referenzlichtstrahlen 8 nicht parallel zueinander verlaufen. Die Referenzlichtstrahlen 8 divergieren vielmehr von einem gedachten Punkt oberhalb der Kamera 3 aus. Der Divergenzwinkel ist dabei durch die Ausrichtung der Laser 6 bestimmt. Die Referenzlichtstrahlen 8 spannen dabei die Mantelkanten einer Pyramide auf.

Die Referenzlichtstrahlen 8 treffen das Objekt 2 in vier Auftreffpunkte 9. Die Wellenlänge der Referenzlichtquellen 6 ist dabei derart gewählt, daß diese von der Kamera 3 erfaßbar ist. Die Auftreffpunkte 9 der Referenzlichtstrahlen 8 zeichnen sich daher im Kamerabild durch eine erhöhte Helligkeit aus. Außerdem ist daran gedacht, die Referenzlichtquellen 6 nicht im Dauerstrichbetrieb, sondern gepulst zu betreiben, wobei die Pulsperiode ein Vielfaches der Zykluszeit der Kamera 3 ist. Auf diese Weise werden bestimmte Bilder, die die Kamera 3 erzeugt, mit und andere ohne Referenzlichtstrahlen 8 erzeugt. Eine einfache Differenzbildung beider Bilder ergibt somit ausschließlich die Wirkung der Referenzlichtstrahlen, so daß auf diese Weise die Auftreffpunkte 9 besonders genau und zuverlässig vermessen werden können. Der Kamera 3 ist eine Rechenschaltung 3' nachgeordnet, die das aufgenommene Bild entzerrt.

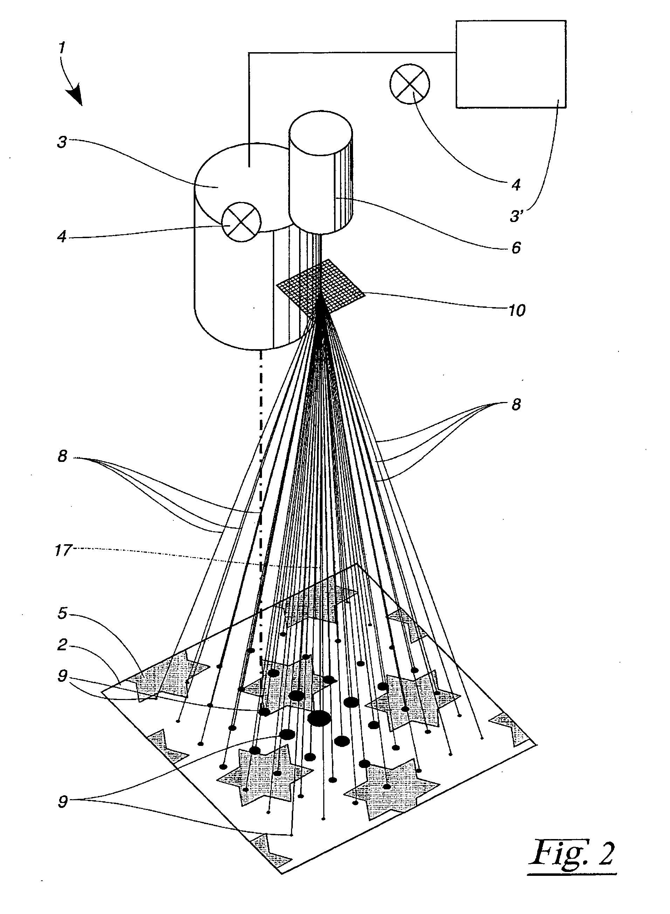

Die Figur 2 zeigt eine alternative Ausbildung der Vorrichtung 1 gemäß Figur 1, wobei gleiche Bezugzeichen gleiche Teile benennen. Im Folgenden wird lediglich auf die Unterschiede zur Ausführungsform gemäß Figur 1 eingegangen.

Die Vorrichtung 1 gemäß Figur 2 weist nur eine Referenzlichtquelle 6 in Form eines Lasers 6 auf. Dabei vereinfacht sich auch die Halterung 7, die in Figur 2 der Einfachheit halber weggelassen ist. Dem Laser 6 ist ein optisches Gitter 10 nachgeordnet, dessen Maschenweite im Bereich einiger Mikrometer liegt. Die kreuzförmige Darstellung des Gitters 10 gemäß Figur 2 dient lediglich der grundsätzlichen Veranschaulichung und weicht von einer maßstäblichen Darstellung erheblich ab. Durch das Gitter 10 wird der vom Laser 6 emmitierte Referenzlichtstrahl 8 gebeugt, wobei ein rasterförmiges Beugungsmuster entsteht. Die Auftreffpunkte 9 der Referenzlichtstrahlen 8 auf das Objekt 2 bilden in diesem Fall eine Matrix, wobei benachbarte Auftreffpunkte 9 im wesentlichen gleiche Abstände aufweisen.

Diese Anordnung hat gegenüber der Ausführungsform gemäß Figur 1 den wesentlichen Vorteil, daß nur ein einziger Laser 6 erforderlich ist, um alle Referenzlichtstrahlen 8 zu erzeugen. Außerdem hängt die Lage der Auftreffpunkte 9 nicht von einer Justierung der Laser 6 zueinander ab, diese wird ausschließlich durch das verwendete Gitter 10 bedingt, welches mit hoher Präzision hergestellt werden kann.

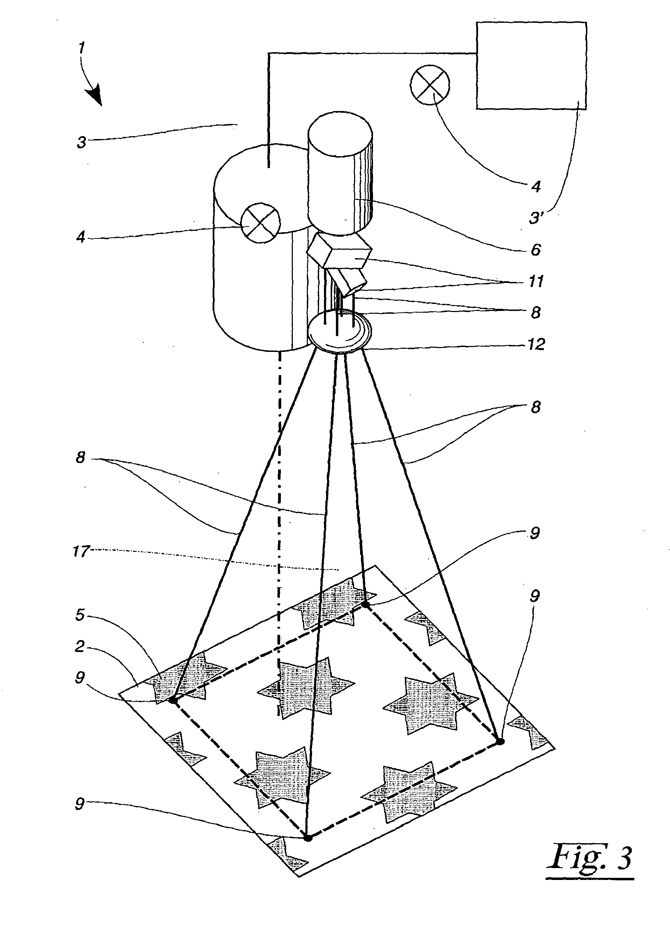

Die Figur 3 zeigt eine weitere Ausführungsform der Vorrichtung 1 gemäß Figur 2, wobei gleiche Bezugzeichen gleiche Teile benennen. Im Folgenden wird lediglich auf die Unterschiede zur Ausführungsform gemäß Figur 2 eingegangen.

Zur Erzeugung der voneinander divergierenden Referenzlichtstrahlen 8 werden in diesem Fall zwei doppelbrechende Kristalle 11 eingesetzt. Diese doppelbrechenden Kristalle 11 verursachen aufgrund des schrägen Einfalls einen Versatz des Referenzlichtstrahls 8. Dieser Versatz erfolgt zum einen in X-Richtung und zum anderen in Y-Richtung, so daß insgesamt vier Referenzlichtstrahlen 8 gebildet werden. Wichtig ist in diesem Zusammenhang allerdings, daß die Referenzlichtquelle 6 unpolarisiertes Licht aussendet, um die Doppelbrechung zu nutzen. Falls die Referenzlichtquelle 6 polarisiertes Licht aussendet, ist es zweckmäßig, die Polarisationsebene derart einzustellen, daß diese etwa 45° zur optischen Achse der doppelbrechenden Kristalle 11 geneigt ist. Fällt die Polarisationsebene mit der optischen Achse der doppelbrechenden Kristalle 1-1 zusammen oder steht die Polarisationsrichtung senkrecht auf dieser, so ergibt sich in den doppelbrechenden Kristallen 11 keine Doppelbrechung. Die vier erzeugten Referenzlichtstrahlen 8 sind nach Austritt aus den doppelbrechenden Kristallen 11 immer noch parallel zueinander und werden durch eine folgende Linse 12 divergent aufgespalten.

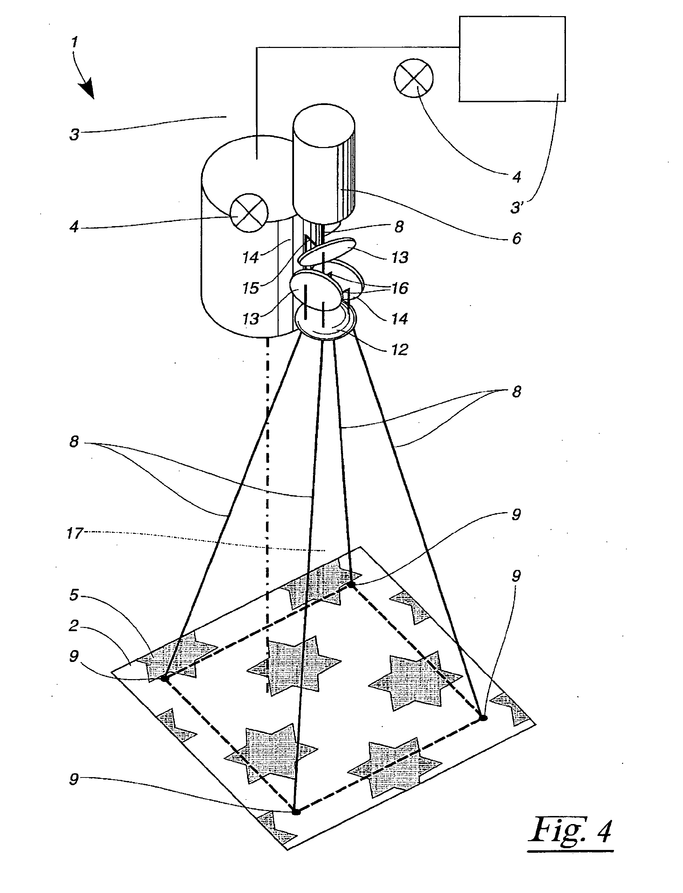

Die Figur 4 zeigt eine weitere Ausführungsform der Vorrichtung gemäß Figur 3, wobei gleiche Bezugzeichen wiederum gleiche Teile benennen. Im Folgenden wird lediglich auf die Unterschiede zur Ausführungsform gemäß Figur 3 eingegangen.

Die Ausführungsform gemäß Figur 4 nutzt statt doppelbrechender Kristalle 11 halbdurchlässige Spiegel 13, denen parallel ausgerichtete Spiegel 14 zugeordnet sind. Der Referenzlichtstrahl 8 trifft zuerst auf den oberen halbdurchlässigen Spiegel 13, der einen Teil des Lichtes durchläßt und einen Teil reflektiert. Der reflektierte Strahl 15 gelangt dann auf einen parallel zum halbdurchlässigen Spiegel 13 ausgerichteten Spiegel 14, der den reflektierten Strahl 15 parallel zur ursprünglichen Ausbreitungsrichtung des Referenzlichtstrahls 8 umlenkt. Beide Strahlen 8, 15 gelangen dann auf den zweiten halbdurchlässigen Spiegel 13, der einen Teil des Lichtes durchläßt und wiederum einen Teil reflektiert. Die beiden reflektierten Strahlen 16 gelangen dann auf einen parallel ausgerichteten Spiegel 14, der die reflektierten Strahlen 16 parallel zur ursprünglichen Ausbreitungsrichtung des Referenzlichtstrahls 8 umlenkt. Auf diese Weise ergeben sich vier parallele Referenzlichtstrahlen 8, die wiederum von der Linse 12 divergent ausgerichtet werden.

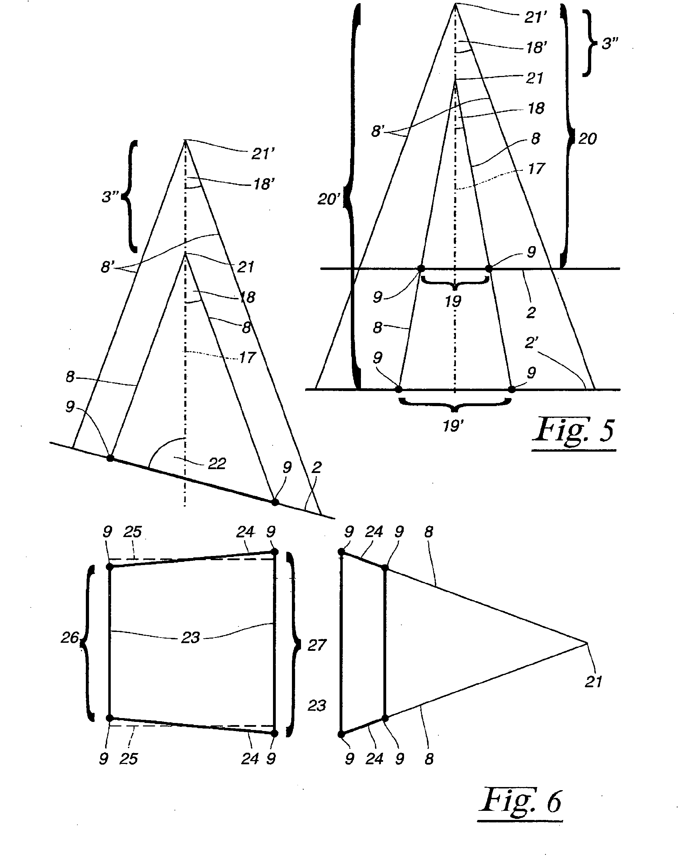

Allen vorbeschriebenen Ausführungsbeispielen ist gemeinsam, daß divergente Referenzlichtstrahlen 8 erzeugt werden, deren Auftreffpunkte 9 auf dem zu erfassenden Objekt 2 von der Kamera 3 erfaßbar sind. Diese Auftreffpunkte 9 finden sich daher im von der Kamera 3 erzeugten Bild wieder. Mit Hilfe der Lage dieser Auftreffpunkte 9 im Pixelbild kann in einem folgenden Schritt das Bild entzerrt werden. Dabei ist zu berücksichtigen, daß sich die Größe des erzeugten Bildes mit dem Abstand zwischen Objekt 2 und Kamera 3 ändert. Ist zusätzlich die Objektebene zur Kameraachse 17 geneigt, so ergeben sich außerdem perspektivische Verzerrungen des aufgenommenen Bildes. Dies wird im Folgenden anhand der Figuren.5 und 6 näher erläutert.

Die Figur 5 zeigt eine Frontalansicht der Vorrichtung 1 gemäß Figur 4, wobei von der Darstellung der Kamera 3 sowie der Referenzlichtquelle 6 zur Vereinfachung der Darstellung abgesehen wurde.

Die divergenten Referenzlichtstrahlen 8 fallen auf das Objekt 2 auf, so daß die Auftreffpunkte 9 im Kamerabild entsprechend heller erscheinen werden. Dabei schließen die Referenzlichtstrahlen 8 einen Divergenzwinkel 18 ein. Dieser Divergenzwinkel 18 ist konstruktiv vorgegeben und daher konstant. Der Abstand 19 zwischen den Auftreffpunkten 9 ist daher direkt proportional zur Entfernung zwischen dem Objekt 2 und einem Konvergenzpunkt 21 der Referenzlichtstrahlen 8. Da die Kamera 3 fest mit der Referenzlichtquelle 6 verbunden ist, ist der Abstand 3" zwischen der Kamera 3 und dem Konvergenzpunkt 21 ebenfalls vorgegeben, so daß auf diese Weise direkt der gewünschte Abstand 20 zwischen der Kamera 3 und dem Objekt 2 bestimmt werden kann. Ist der gemessene Abstand 19 zwischen den Auftreffpunkten 9 in Pixel der Kamera 3 gleich $P_m$, der Divergenzwinkel 18 der Referenzlichtstrahlen 8 gleich $\delta$, der Öffnungswinkel 18' des Kamerasichtfeldes 8' gleich $\alpha$ und der Abstand 3" zwischen den Divergenzpunkten 21 und 21' gleich K, so ergibt sich für den gesuchten Abstand 20a:

$$a = \frac{K}{1 - P_m \frac{\tan \alpha}{\tan \delta}} - K$$

Ist das Objekt 2 weiter von der Kamera 3 entfernt, so daß es den Abstand 20 aufweist, so vergrößert sich der Abstand 19' der Auftreffpunkte 9 entsprechend. Dies ist in Figur 5 mit dem Bezugszeichen 2' veranschaulicht.

Bei bekannten Abbildungseigenschaften der Kamera 3 kann auf diese Weise unmittelbar aus dem aufgenommenen Kamerabild der Objektabstand 20, 20' ermittelt werden.

Ist das Objekt 2 gegen die Kameraachse 17 geneigt, so wird das von der Kamera 3 aufgenommene Bild zusätzlich perspektivisch verzerrt. Diese Situation ist in Figur 6 dargestellt. Das Objekt 2 schließt dabei mit der Kameraachse 17 einen nicht rechtwinkeligen Neigungswinkel 22 ein, was insbesondere aus der in Figur 6 oben dargestellten Aufrißdarstellung zu sehen ist.

In der Figur 6 ist rechts eine zugeordnete Seitenrißdarstellung gezeigt. Die in dieser Figur gezeigten, gedachten Verbindungslinien 23 zwischen den Auftreffpunkten 9 verlaufen parallel zueinander, da in dieser Richtung das Objekt 2 senkrecht zur Kameraachse 17 ausgerichtet ist. Verbindungslinien 24 in der hierzu grundsätzlich normalen Richtung verlaufen dagegen aufgrund der Neigung des Objekts 2 konvergent.

Aufgrund dieser Abbildungsbedingungen ergibt sich in der in Figur 6 mittig dargestellten Grundrißdarstellung eine entsprechende perspektivische Verzerrung. Aufgrund dieser Verzerrung liegen die Auftreffpunkte 9 nicht mehr auf den Eckpunkten eines Quadrats, sondern auf denen eines Trapezes.

Der Abstand 20 des Objekts 2 von der Kamera 3 kann in ähnlicher Weise - wie zu Figur 5 beschrieben - berechnet werden. Hierbei muß der folgende Ausdruck berechnet werden, der den in Figur 6 mit der strichlierten Linie 25 dargestellten Mittelwert $P_m$ der Pixelzahl der Längen 26, 27 enthält.

$$a = \frac{K}{N_g - P_m \frac{\cot \alpha}{\cot \delta} \frac{\cot^2 \beta - \cot^2 \delta}{\cot^2 \beta - \cot^2 \alpha}} - K$$

Für den Sonderfall $\alpha = \delta$ vereinfacht sich dieser Ausdruck zu:

$$a = \frac{K}{N_g - P_m} - K$$

Aus der trapezförmigen Verzerrung des ursprünglichen Quadrates, welches die Auftreffpunkte 9 ergeben, läßt sich unmittelbar der Neigungswinkel 22 des Objekts 2 berechnen. Hierzu betrachtet man die Grundrißdarstellung gemäß Figur 6, die in dieser Form von der Kamera 3 aufgenommen wird. Die beiden parallelen Seiten 23 sind in diesem Fall ungleich lang und besitzen die Längen 26 *v* bzw. 27 *u*. Somit ergibt sich für den als β bezeichneten Neigungswinkel 22 des Objekts 2

$$\beta = arc\cot\left(\frac{u-v}{u+v}\cot\delta\right)$$

Da in diese Gleichung nur relative Längen eingehen, können für die Variablen *u*, *v* auch die gemessenen Pixelwerte eingesetzt werden.

Ist das Objekt 2 sowohl in X- als auch in Y-Richtung geneigt, so wird die oben beschriebene Vorschrift für beide Koordinaten angewandt. In diesem Fall verursacht die Neigung des Objekts 2 eine perspektivische Verzerrung in beiden Koordinatenrichtungen, so daß aus dem ursprünglichen Quadrat ein unregelmäßiges Viereck wird.

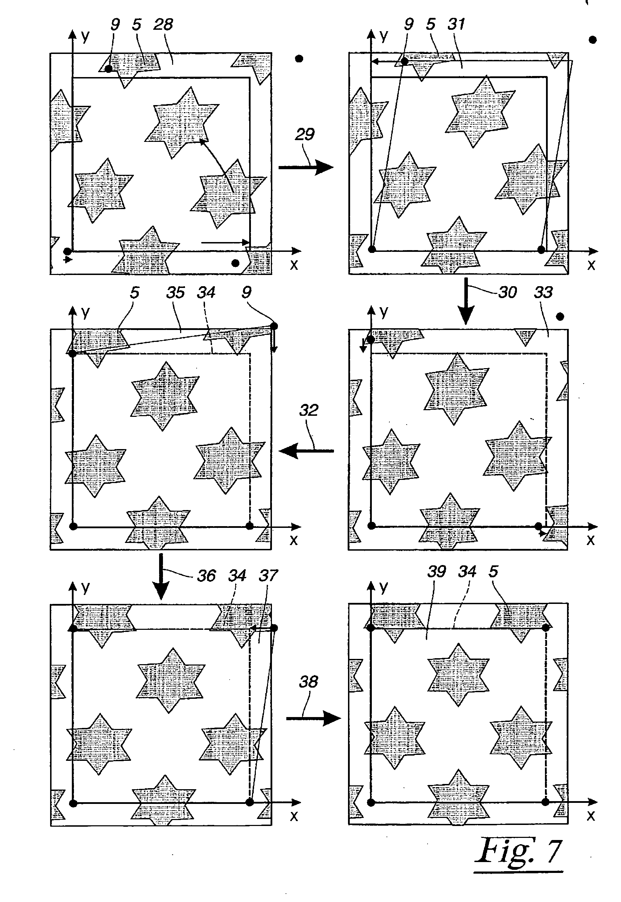

Schließlich zeigt die Figur 7 ein Verfahren zur Entzerrung des von der Kamera 3 aufgenommenen Bildes 28 mit Hilfe der im Kamerabild 28 enthaltenen Auftreffpunkte 9. Das Korrekturverfahren beginnt dabei links oben, wo das Originalkamerabild 28 dargestellt ist. Die Auftreffpunkte 9 bilden dabei ein unregelmäßiges. Viereck, welches in keiner Weise zu den Koordinatenachsen x, y ausgerichtet ist.

Im ersten Schritt 29 wird zunächst das gesamte Bild 28 einer Translation und Rotation 29 unterworfen. Dabei wird der linke untere Auftreffpunkt 9 in den Koordinatenursprung verschoben und der rechte untere Auftreffpunkt 9 auf die X-Achse gedreht. Diese Operation wird auf die gesamten Bilddaten 28 angewandt, so daß sowohl das aufgenommene Muster 5 als auch die Auftreffpunkte 9 entsprechend transformiert werden.

Im zweiten Schritt 30 wird das transformierte Bild 31 einer Parallelogrammtransformation unterworfen, durch die der linke obere Auftreffpunkt 9 auf der Y-Achse zu liegen kommt. Die X-Achse ist von dieser Transformation unberührt, so daß die unteren Auftreffpunkte 9 in ihrer Lage verbleiben. Auch diese Transformation wird auf die gesamten Bilddaten 31 angewandt.

Im nächsten Schritt 32 wird das erneut transformierte Bild 33 einer Dehnung unterworfen, die sich sowohl auf die X- bzw. Y-Achse auswirkt. Aufgrund dieser Dehnung 32 gelangen der linke obere und rechte untere Auftreffpunkt 9 jeweils auf normierte Werte der Y- bzw. X-Achse. Nunmehr liegt lediglich der rechte obere Auftreffpunkt 9 nicht in seiner korrekten Lage am rechten oberen Eckpunkt des normierten Quadrats 34.

Anschließend wird das erneut transformierte Bild 35 einer Trapez-Transformation 36 unterworfen, wobei die Trapezachse durch den linken oberen Auftreffpunkt 9 verläuft. Auf diese Weise bleiben alle Punkte auf der X- bzw. Y-Achse von der Transformation unberührt. Durch diese Trapez-Transformation 36 gelangt der rechte obere Auftreffpunkt 9 auf den korrekten Y-Wert.

Anschließend wird das transformierte Bild 37 einer weiteren Trapez-Transformation 38 unterworfen. Die Achse der Trapez-Transformation 38 verläuft in diesem Fall durch den rechten unteren Auftreffpunkt 9. Auch diese Transformation 38 läßt die Werte auf der X- bzw. Y-Achse unberührt. Auf diese Weise kommt der rechte obere Auftreffpunkt 9 im rechten oberen Eck des normierten Quadrats 34 zu liegen. Diese Transformation 38 wird wie alle vorgenannten Transformationen auf sämtliche Bilddaten angewendet, so daß als Ergebnis ein entzerrtes Bild 39 vorliegt, bei dem die Auftreffpunkte 9 die Eckpunkte des normierten Quadrats 34 bilden.

An diesem entzerrten Bild 39 kann das Muster 5 exakt vermessen werden. Damit ist eine einfache Qualitätskontrolle beispielsweise durch Vergleich mit gespeicherten Musterdaten möglich. Ist das Objekt 2 beispielsweise eine textile, gemusterte Warenbahn, kann das entzerrte Kamerabild 39 auch problemlos zum mustergerechten Richten eingesetzt werden, da in diesen Bilddaten enthaltene Verzerrungen zweifelsfrei von der Textilbahn selbst und nicht von Ausrichtungsfehlern der Kamera 3 herrühren.

Das vorgenannte Verfahren zur Entzerrung des Kamerabildes 28 ist zwar mathematisch recht einfach, durch die vielen Transformationen, die hintereinander auszuführen sind, jedoch sehr rechenaufwendig. Problematisch ist insbesondere, daß die einzelnen Transformationen stets auf die gesamten Bilddaten angewendet werden müssen, um am Ende das entzerrte Bild 39 zu erzeugen.

Alternativ kann die gesamte Entzerrung auch in einem einzigen Schritt erfolgen. Hierzu werden die Bildpunkte (*x*, *y*) des Originalkamerabildes 28 der folgenden Transformation unterworfen, um die entzerrten Bildpunkte (*x'*, *y'*) zu erzeugen.

$$\begin{pmatrix} x' \\ y' \end{pmatrix} = \begin{pmatrix} a \\ b \end{pmatrix} + \begin{pmatrix} x & y \end{pmatrix} + \begin{pmatrix} c + gy & f \\ e & d + hx \end{pmatrix}$$

In dieser Transformation sind $a, b, c, d, e, f, g, h$-Parameter, die vor Anwendung der Transformation aus der Lage der Auftreffpunkte 9 im ursprünglichen Kamerabild 28 ermittelt werden. Bezeichnet man die gemessenen X-Koordinaten der vier Auftreffpunkte 9 im Kamerabild 28 als $P_{x1}, P_{x2}, P_{x3}$ und $P_{x4}$, und die Y-Koordinaten derselben Auftreffpunkte 9 als $P_{y1}, P_{y2}, P_{y3}$ und $P_{y4}$, so berechnen sich die ursprünglichen, also normierten Positionen $P'$ der Auftreffpunkte 9 unter Anwendung der obigen Transformation in folgender Weise:

$$\begin{pmatrix} P'_{x1} & P'_{x2} & P'_{x3} & P'_{x4} \end{pmatrix} = \begin{pmatrix} a & c & e & g \end{pmatrix} \cdot \begin{pmatrix} 1 & 1 & 1 & 1 \\ P_{x1} & P_{x2} & P_{x3} & P_{x4} \\ P_{y1} & P_{y2} & P_{y3} & P_{y4} \\ P_{x1}P_{y1} & P_{x2}P_{y2} & P_{x3}P_{y3} & P_{x4}P_{y4} \end{pmatrix}$$

$$\begin{pmatrix} P'_{y1} & P'_{y2} & P'_{y3} & P'_{y4} \end{pmatrix} = \begin{pmatrix} b & d & f & h \end{pmatrix} \cdot \begin{pmatrix} 1 & 1 & 1 & 1 \\ P_{y1} & P_{y2} & P_{y3} & P_{y4} \\ P_{x1} & P_{x2} & P_{x3} & P_{x4} \\ P_{x1}P_{y1} & P_{x2}P_{y2} & P_{x3}P_{y3} & P_{x4}P_{y4} \end{pmatrix}$$

Das oben dargestellte lineare Gleichungssystem liefert acht Gleichungen für die acht Variablen $a$ bis $h$. Damit kann dieses Gleichungssystem in einfacher Weise nach den gesuchten Transformationsparametern $a$ bis $h$ aufgelöst werden, indem an die beiden obigen Matrixgleichungen jeweils die inverse Transformationsmatrix von rechts multipliziert wird:

$$\begin{pmatrix} a & c & e & g \end{pmatrix} = \begin{pmatrix} P'_{x1} & P'_{x2} & P'_{x3} & P'_{x4} \end{pmatrix} \cdot \begin{pmatrix} 1 & 1 & 1 & 1 \\ P_{x1} & P_{x2} & P_{x3} & P_{x4} \\ P_{y1} & P_{y2} & P_{y3} & P_{y4} \\ P_{x1}P_{y1} & P_{x2}P_{y2} & P_{x3}P_{y3} & P_{x4}P_{y4} \end{pmatrix}^{-1}$$

$$\begin{pmatrix} b & d & f & h \end{pmatrix} = \begin{pmatrix} P'_{y1} & P'_{y2} & P'_{y3} & P'_{y4} \end{pmatrix} \cdot \begin{pmatrix} 1 & 1 & 1 & 1 \\ P_{y1} & P_{y2} & P_{y3} & P_{y4} \\ P_{x1} & P_{x2} & P_{x3} & P_{x4} \\ P_{x1}P_{y1} & P_{x2}P_{y2} & P_{x3}P_{y3} & P_{x4}P_{y4} \end{pmatrix}^{-1}$$

Im oben bezeichneten Gleichungssystem stehen auf der linken Seite die gesuchten Transformationsparameter $a$ bis $h$, während auf der rechten Seite die gemessenen Positionen der Auftreffpunkte 9 im Kamerabild 28 und die zugehörigen normierten Positionen stehen. Die normierten Positionen $P'$ ergeben sich direkt aus der Geometrie der Referenzlichtstrahlen 8. Schließen diese beispielsweise ein Quadrat der Seitenlänge s ein, so ergeben sich für die normierten Positionen der Auftreffpunkte 9 im entzerrten Bild 39 folgende Werte:

$$\begin{pmatrix} P'_{x1} & P'_{x2} & P'_{x3} & P'_{x4} \end{pmatrix} = \begin{pmatrix} 0 & s & s & 0 \end{pmatrix}$$

$$\begin{pmatrix} P'_{y1} & P'_{y2} & P'_{y3} & P'_{y4} \end{pmatrix} = \begin{pmatrix} 0 & 0 & s & s \end{pmatrix}$$

Auf diese Weise können die Transformationsparameter unmittelbar aus den gemessenen Positionen der Auftreffpunkte 9 im Kamerabild 28 berechnet werden, ohne stets die gesamten Bilddaten transformieren zu müssen. Mit allen Transformationsparametern $a$ bis $h$ wird die oben beschriebene Transformation einmal auf die gesamten Bilddaten 28 angewendet, um auf diese Weise direkt das entzerrte Bild 39 zu berechnen.

Selbstverständlich sind neben den beiden geschilderten Extremfällen auch Zwischenlösungen möglich, in denen zwar mehrere Transformationsschritte auf die gesamten Bilddaten angewendet werden, aber in jedem Transformationsschritt eine Reihe von Transformationen gleichzeitig berücksichtigt wird. Auf diese Weise kann der mathematische Aufwand bei mäßiger Steigerung des Rechenaufwandes in Grenzen gehalten werden.

**Bezugszeichenliste**

| | |
|---|---|
| 1 | Vorrichtung |
| 2, 2' | Objekt |
| 3 | Kamera |
| 3' | Rechenschaltung |
| 3 " | Abstand |
| 4 | Lichtquelle |
| 5 | Muster |
| 6 | Referenzlichtquelle |
| 7 | Halterung |
| 8 | Referenzlichtstrahl |
| 8' | Kamerasichtfeld |
| 9 | Auftreffpunkt |
| 10 | Gitter |
| 11 | doppelbrechender Kristall |
| 12 | Linse |
| 13 | halbdurchlässiger Spiegel |
| 14 | Spiegel |

| 15 | reflektierter Strahl |
| 16 | reflektierter Strahl |
| 17 | Kameraachse |
| 18, 18' | Divergenzwinkel |
| 19, 19' | Abstand |
| 20, 20' | Abstand |
| 21, 21' | Konvergenzpunkt |
| 22 | Neigungswinkel |
| 23 | Verbindungslinie |
| 24 | Verbindungslinie |
| 25 | Mittelwert |
| 26 | Länge |
| 27 | Länge |
| 28 | Kamerabild |
| 29 | Translation, Rotation |
| 30 | Parallelogrammtransformation |
| 31 | transformiertes Bild |
| 32 | Dehnung |
| 33 | transformiertes Bild |
| 34 | normiertes Quadrat |
| 35 | transformiertes Bild |
| 36 | Trapez-Transformation |
| 37 | transformiertes Bild |
| 38 | Trapez-Transformation |
| 39 | entzerrtes Bild |

**Patentansprüche**

1. Verfahren zur optischen Erfassung eines Objekts (2), insbesondere einer laufenden Warenbahn, gegen das eine Kamera (3) gerichtet wird, wobei mindestens drei nicht parallele und nicht in einer Ebene liegende Referenzlichtstrahlen (8) gegen das Objekt (2) gerichtet werden, deren Auftreffpunkte (9) auf das Objekt (2) von der Kamera (3) erfaßt werden, wobei gegenseitige Abstände (26, 27) und/oder Winkel der Auftreffpunkte (9) im Kamerabild (28) berechnet werden.

**2.** Verfahren nach Anspruch 1, bei dem aus den von der Kamera (3) erfaßten Auftreffpunkten (9) ein entzerrtes Kamerabild (39) berechnet wird.

**3.** Verfahren nach Anspruch 2, bei dem auf das Kamerabild (28) mindestens eine Translations- (29), Rotations-(29), Dehnungs- (32), Parallelogramm- (30) und/oder Trapez-Transformation (36, 38) angewendet wird, wobei Transformationsparameter aus den Auftreffpunkten (9) im Kamerabild (28) berechnet werden.

**4.** Verfahren nach mindestens einem der Ansprüche 1 bis 3, bei dem aus den Auftreffpunkte (9) im Kamerabild (28) die Objektentfernung (20, 20') und/oder mindestens ein Winkel (22) zwischen einer Kameraachse (17) und dem Objekt (2) berechnet wird.

**5.** Verfahren nach Anspruch 4, bei dem aus dem gegenseitigen Abstand (26, 27) zweier Auftreffpunkte (9) und/oder dem Mittelwert mehrerer Abstände (26, 27) die Entfernung (20, 20') der Kamera (3) vom Objekt (2) berechnet wird.

**6.** Verfahren nach Anspruch 4 oder 5, bei dem aus dem Winkel (2) gedachter Verbindungsstrecke (23, 24) und/oder der Längendifferenz (26, 27) zweier gedachter Verbindungsstrecken (23, 24) zwischen je zwei Auftreffpunkten (9) ein Winkel (22) zwischen der Kameraachse (17) und dem Objekt (2) berechnet wird.

**7.** Verfahren nach mindestens einem der Ansprüche 1 bis 6, bei dem die Referenzlichtstrahlen (8) synchron zur Kamera (3) angesteuert werden.

**8.** Verfahren nach mindestens einem der Ansprüche 1 bis 7, bei dem eine Periodenlänge und/oder Raumfrequenz einer periodischen Struktur des Objekts erfaßt wird, wobei Abbildungsfehler der Kamera (3) korrigiert werden.

**9.** Verfahren nach mindestens einem der Ansprüche 1 bis 8, bei dem die Kamera (3) unter Berücksichtigung der berechneten Abstände (26, 27) und/oder Winkel der Auftreffpunkte (9) im Kamerabild (28) auf das Objekt (2) ausgerichtet wird.

**10.** Vorrichtung zur optischen Erfassung eines Objekts (2), insbesondere einer laufenden Warenbahn, wobei die Vorrichtung (1) mindestens eine gegen das Objekt (2) gerichtete Kamera (3) und mindestens eine gegen das Objekt (2) nicht parallele und nicht in einer Ebene liegende Referenzlichtstrahlen (8) richtende Referenzlichtquelle (6) aufweist, und Auftreffpunkte (9) der Referenzlichtstrahlen (8) auf dem Objekt (2) von der Kamera (3) in elektrische Signale umwandelbar sind, und eine Rechenschaltung (3') vorgesehen ist, die Abstände (26, 27) und/oder Winkel zwischen den Auftreffpunkten (9) im Kamerabild (28) berechnet.

**11.** Vorrichtung nach Anspruch 10, bei der die Referenzlichtquelle (6) mindestens einen Laser (6) aufweist.

**12.** Vorrichtung nach Anspruch 10 oder 11, bei der der Referenzlichtquelle (6) mindestens ein Beugungsgitter (10), teildurchlässigen Spiegel (13) und/oder doppelbrechender Refraktor (11) nachgeordnet ist.

**13.** Vorrichtung nach mindestens einem der Ansprüche 10 bis 12, bei der die Referenzlichtstrahlen (8) in etwa von einem gedachten Punkt (21) aus divergieren, der nicht mit einem Konvergenzpunkt (21')des Kamerasichtfeldes zusammenfällt.

**14.** Vorrichtung nach mindestens einem der Ansprüche 10 bis 13, bei der benachbarte Referenzlichtstrahlen (8) in etwa gleiche Winkel (18) einschließen.

**15.** Vorrichtung nach mindestens einem der Ansprüche 10 bis 14, bei der die Referenzlichtstrahlen (8) in einer Ebene senkrecht zur optischen Achse (17) der Kamera (3) Eckpunkte eines Quadrats (34) bilden.

**16.** Vorrichtung nach mindestens einem der Ansprüche 10 bis 15, bei der der Referenzlichtquelle (6) mindestens eine Zylinderlinse nachgeordnet ist, um das Objekt (2) strichförmig zu beleuchten.

*Fig. 1*

*Fig. 2*

*Fig. 3*

_Fig. 4_

*Fig. 5*

*Fig. 6*

Fig. 7

EP 2 053 348 A1

<table>
<tr><td colspan="4" align="center">Europäisches Patentamt<br>European Patent Office<br>Office européen des brevets</td><td align="center">EUROPÄISCHER RECHERCHENBERICHT</td><td>Nummer der Anmeldung<br>EP 07 02 4244</td></tr>
</table>

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 974 811 A (HEWLETT PACKARD CO [US]) 26. Januar 2000 (2000-01-26) | 1,4-7, 9-16 | INV. G01B11/02 G01N21/00 G06T7/00 |
| Y | * Absätze [0027] - [0055]; Abbildungen 1-7 * | 2,3,8 | |
| X | US 2004/128102 A1 (PETTY JOHN [GB] ET AL PETTY JOHN MICHAEL [GB] ET AL) 1. Juli 2004 (2004-07-01) | 1,4-7, 9-16 | |
| Y | * Absätze [0102] - [0139]; Abbildungen 1-9 * | 2,3,8 | |
| X | EP 1 431 708 A (DELPHI TECH INC [US]) 23. Juni 2004 (2004-06-23) | 1,4-7, 9-16 | |
| Y | * Absätze [0007] - [0014]; Abbildungen 1-4,7 * | 2,3,8 | |
| Y | EP 0 157 299 A (HITACHI LTD [JP]) 9. Oktober 1985 (1985-10-09) | 2,3,8 | |
| A | * Seite 14, Zeile 13 - Seite 15, Zeile 7; Abbildungen 11,12 * | 1,4-7, 9-16 | |

RECHERCHIERTE SACHGEBIETE (IPC)

G01B
G01N
G06T

Der vorliegende Recherchenbericht wurde für alle Patentansprüche erstellt

| Recherchenort | Abschlußdatum der Recherche | Prüfer |
|---|---|---|
| München | 16. Februar 2009 | Beyfuß, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 02 4244

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 0974811 | A | 26-01-2000 | DE | 69921559 D1 | 09-12-2004 |
| | | | DE | 69921559 T2 | 27-10-2005 |
| | | | JP | 2000089092 A | 31-03-2000 |
| | | | US | 6741279 B1 | 25-05-2004 |
| US 2004128102 | A1 | 01-07-2004 | AT | 284541 T | 15-12-2004 |
| | | | DE | 60202198 D1 | 13-01-2005 |
| | | | DE | 60202198 T2 | 08-12-2005 |
| | | | EP | 1364226 A1 | 26-11-2003 |
| | | | GB | 2372656 A | 28-08-2002 |
| | | | WO | 02068987 A1 | 06-09-2002 |
| EP 1431708 | A | 23-06-2004 | US | 2004119035 A1 | 24-06-2004 |
| EP 0157299 | A | 09-10-1985 | DE | 3566160 D1 | 15-12-1988 |
| | | | JP | 1796581 C | 28-10-1993 |
| | | | JP | 5005041 B | 21-01-1993 |
| | | | JP | 60200111 A | 09-10-1985 |

EPO FORM P0461

Für nähere Einzelheiten zu diesem Anhang : siehe Amtsblatt des Europäischen Patentamts, Nr.12/82